# EUROPÄISCHE PATENTSCHRIFT

(11) **EP 2 940 364 B1**
(45) Veröffentlichungstag und Bekanntmachung des Hinweises auf die Patenterteilung: **15.07.2020**
(21) Anmeldenummer: 15001002.3
(22) Anmeldetag: 08.04.2015
(51) Int. Cl.: F16L 33/207

(54) **SCHLAUCHKUPPLUNG**
HOSE COUPLING
RACCORD DE FLEXIBLE

(30) Priorität: 19.04.2014 DE 202014003383 U; 02.08.2014 DE 102014011583
(43) Veröffentlichungstag der Anmeldung: 04.11.2015
(60) Teilanmeldung: 19155348.6
(73) Patentinhaber: Neoperl GmbH, 79379 Müllheim (DE)
(72) Erfinder:
(74) Vertreter: Börjes-Pestalozza, Henrich

(56) Entgegenhaltungen:
- WO-A1-2014/139841
- US-A- 2 139 745
- US-A- 4 330 142
- US-A- 5 709 413

## Beschreibung

Die Erfindung betrifft eine Schlauchkupplung, die hülsenförmig ausgestaltet ist und die an wenigstens einem Kupplungsende einen Anschlussstutzen mit einer, zumindest in einem Stutzen-Teilbereich außenumfangsseitig vorgesehenen Halteprofilierung aufweist, auf welches Kupplungsende ein Schlauchende eines flexiblen Schlauches aufschiebbar ist, wobei die Halteprofilierung durch, am Außenumfang des Anschlussstutzens vorgesehene Haltenuten gebildet ist, die in Stutzen-Umfangsrichtung orientierte Nut-Längsseiten und in Stutzen-Längsrichtung orientierte Nut-Schmalseiten haben, wobei die Haltenuten lediglich als Einsenkungen in dem Stutzen-Außenumfang ausgebildet sind, wobei die Haltenuten einen Nutgrund aufweisen, der plan ausgestaltet ist, und wobei die Halteprofilierung zumindest zwei, etwa auf einer gemeinsamen Umfangslinie angeordnete Haltenuten aufweist.

Im Sanitärbereich werden anstelle von dünnen Kupferrohren zunehmend flexible Schlauchleitungen verwendet, um die Wasserzufuhr beispielsweise von einem Eckventil zu einem Handwaschbecken oder dergleichen Wasserverbrauchsstelle zu bewerkstelligen. Um den flexiblen Schlauch mit dem Eckventil oder dergleichen Wasserzuleitung und/oder mit der Wasserverbrauchsstelle zu verbinden, ist eine Schlauchkupplung der eingangs erwähnten Art erforderlich.

Die vorbekannten Schlauchkupplungen sind regelmäßig hülsenförmig ausgebildet und weisen an ihrem einen Ende ein Anschlussgewinde oder eine Überwurfmutter auf, während an dem anderen Kupplungsende ein Anschlussstutzen vorgesehen ist. Dieser Anschlussstutzen weist zumindest in einem Stutzen-Teilbereich außenumfangsseitig eine Halteprofilierung auf, so dass auf dieses profilierte Kupplungsende eines der beiden Schlauchenden eines flexiblen Schlauches aufgeschoben werden kann. Diese Halteprofilierung ist häufig aus wenigstens einem Ringflansch gebildet, der sich zu seinem Außenumfang hin in Richtung zum freien Stutzenende derart verjüngt, dass sich das Schlauchende leicht aufschieben lässt. Nachteilig ist jedoch, dass ein solcher außenumfangsseitig spritz zulaufender Ringflansch wie eine umlaufende Schneidkante wirkt. Wird auf die Schlauchleitung ein Drehmoment ausgeübt und wird der Anschlussstutzen relativ zur Schlauchleitung verdreht, besteht die Gefahr, dass sich der zumindest eine Ringflansch in den Schlauchinnenumfang der Schlauchleitung eingräbt, was mit einer Undichtigkeit oder mit einer reduzierten Berstsicherheit der Schlauchleitung verbunden sein kann.

Aus der US 5,709,413 A kennt man bereits eine Schlauchkupplung der eingangs erwähnten Art, die zum flüssigkeitsführenden Verbinden einer Rohrleitung an einer Vorrichtung mit einer Dichtfläche hülsenförmig ausgebildet ist. Die vorbekannte Schlauchkupplung hat an wenigstens einem Kupplungsende einen pfeilspitzenförmigen Anschlussstutzen. Während ein die Pfeilspitze bildender Einsetzkonus des Anschlussstutzens an der Dichtfläche der Vorrichtung anlegbar ist, ist an dem dahinterliegenden Schaft der Pfeilform außenumfangsseitig eine Halteprofilierung vorgesehen, auf die das Schlauchende eines flexiblen Schlauches aufschiebbar ist. Diese Halteprofilierung ist aus Haltenuten gebildet, die in Stutzen-Umfangsrichtung orientierte Nut-Längsseiten und in Stutzen-Längsrichtung orientierte Nut-Schmalseiten aufweist. Dabei ist in den Figuren 8j und 13 der US 5,709,413 A eine Ausführung dargestellt, bei der die in Umfangsrichtung des Stutzens orientierten und zum Aufnehmen des komprimierten Schlauchmaterials bestimmten Haltenuten durch Fräsen des Stutzens flach in den Anschlussstutzen maschinell eingearbeitet werden. Um den die Pfeilspitze bildenden Konus des Anschlussstutzens fest und dicht gegen die Dichtfläche der Vorrichtung pressen zu können, ist eine hülsenförmige Überwurfmutter mit Außengewinde vorgesehen, die den auf den Anschlussstutzen aufgeschobenen Schlauch umschließt, den am Anschlussstutzen endseitig vorgesehenen Konus hintergreift und in ein Innengewinde der Vorrichtung einschraubbar ist.

Aus der US-A-4 330 142 kennt man bereits eine hülsenförmige Schlauchkupplung, die an wenigstens einem Kupplungsende einen Anschlussstutzen hat, der in zumindest einem Stutzen-Teilbereich außenumfangsseitig eine Halteprofilierung trägt, wobei auf das als Anschlussstutzen ausgebildete Kupplungsende das Schlauchende eines flexiblen Schlauches aufschiebbar ist. Die Halteprofilierung wird mittels Prägestempeln durch Kaltverformung in das Kupplungsende gepresst. Diese Prägestempel sind in gleichmäßigen Abständen auf gemeinsamen Umfangslinien um das Kupplungsende herum angeordnet und werden in radialer Richtung auf das Kupplungsende hin zugefahren, bis die konkav gerundete Prägespitze eines jeden Prägestempels jeweils eine etwa rechteckige Nut in das Kupplungsende einprägt, wobei das verdrängte Material sich zwischen den Nuten zu einem die Nuten voneinander trennenden Grat aufwirft. Die vergleichsweise schmalen Grate zwischen den Nuten können höhere Drehmomente kaum aufnehmen und übertragen. Ein unerwünschtes Verdrehen der Schlauchkupplung gegenüber dem Schlauchende wird noch dadurch begünstigt, dass der Nutgrund einer jeden Nut aufgrund des gewählten Herstellungsverfahrens konvex ausgestaltet ist.

Aus der US 2 139 745 A ist eine Schlauchkupplung bekannt, die eine Halteprofilierung aus schräg zu einer Längsachse der Schlauchkupplung ausgerichteten Halterippen aufweist. Die am Außenumfang eines Anschlussstutzens angeordneten Halterippen sind dabei durch mehrere, parallel zur Längsachse der Schlauchkupplung verlaufenden Grate getrennt, wodurch die Halterippen in mehrere Bereiche unterteilt sind. Die durch die Halterippen ausgebildete Oberfläche ist dabei konvex ausgeformt. Die Übertragung eines Drehmoments auf die zwischen einem Anschlussstutzen und einem auf den Anschlussstutzen aufgeschobenen Schlauchende ist durch die relativ schmalen und dadurch nicht ausreichend stabilen Grate verbesserungswürdig.

Aus der WO 2014/139 841 A1 ist ein Schlauchleitungsverbinder mit einem Anschlussstutzen bekannt, wobei an dem Anschlussstutzen eine Halteprofilierung aus mehreren Haltenuten und zwischen den Haltenuten angeordneten Graten ausgebildet ist. Der Nutgrund der einzelnen Haltenuten ist konvex ausgestaltet. Die Übertragung eines Drehmoments auf die zwischen dem Anschlussstutzen und einem auf den Anschlussstutzen aufgeschobenen Schlauchende ist auch hier verbesserungswürdig, da die relativ schmalen und dadurch nicht ausreichend stabilen Grate bei Übertragung einer höheren Kraft, beispielsweise bei Verwendung eines Werkzeugs, brechen können.

Es besteht daher die Aufgabe, eine Schlauchkupplung der eingangs erwähnten Art zu schaffen, die auch bei einer Drehbewegung der Schlauchleitung in Relation zum Anschlussstutzen weiterhin eine hohe Dichtigkeit und Belastbarkeit gewährleistet.

Die erfindungsgemäße Lösung dieser Aufgabe besteht bei der Schlauchkupplung der eingangs erwähnten Art in der Merkmalskombination nach Anspruch 1.

Bei der erfindungsgemäßen Schlauchkupplung wird die Halteprofilierung durch Haltenuten gebildet, die am Außenumfang des Anschlussstutzens auf wenigstens zwei Umfangslinien vorgesehen sind. Die jeweils als Einsenkung am Stutzen-Außenumfang vorgesehenen Haltenuten weisen in Stutzen-Umfangsrichtung orientierte Nut-Längsseiten und in Stutzen-Längsrichtung orientierte Nut-Schmalseiten auf, wobei die einander zugewandten Nut-Längsseiten der auf benachbarten Umfangslinien angeordneten Haltenuten voneinander beabstandet sind. In diese Haltenuten wird das innenumfangsseitige elastische Material des flexiblen Schlauches derart verdrängt, dass eine belastbare formschlüssige Verbindung zwischen Anschlussstutzen und dem Schlauchende der flexiblen Schlauchleitung gewährleistet ist. Dabei liegt der Innenumfang des Schlauchendes an dem die Haltenuten tragenden Außenumfang des Anschlussstutzens an. Da die die Halteprofilierung bildenden Haltenuten lediglich als Einsenkungen in dem Stutzen-Außenumfang ausgebildet sind, und da auf vorstehende und sich außenumfangsseitig verjüngende Ringflansche verzichtet werden kann, ist ein stabilitätsminderndes Einschneiden des Schlauch-Innenumfangs nicht notwendig. Um auch ein höheres Drehmoment auf die zwischen dem Anschlussstutzen und dem auf den Anschlussstutzen aufgeschobenen Schlauchende zu gewährleisten, weisen die Haltenuten einen Nutgrund auf, der plan ausgestaltet ist. Dabei sind die auf benachbarten Umfangslinien angeordneten Haltenuten versetzt zueinander angeordnet. Auf einen derart unrunden Verbindungsbereich zwischen dem Anschlussstutzen einerseits und der auf ihn aufgeschobenen Schlauchleitung andererseits können auch höhere Drehmomente übertragen und abgeführt werden. Die erfindungsgemäße Schlauchkupplung zeichnet sich selbst dann durch eine hohe Dichtigkeit, Belastbarkeit und Berstsicherheit aus, wenn die Schlauchleitung in Relation zur Schlauchkupplung verdreht wird.

Eine bevorzugte Ausführungsform der Erfindung sieht vor, dass die Halteprofilierung in einem dem Kupplungsende abgewandten Stutzen-Teilbereich des Anschlussstutzens vorgesehen ist, dass die Halteprofilierung durch wenigstens eine, am Außenumfang des Anschlussstutzens vorgesehene Haltenut gebildet ist, welche in Stutzen-Umfangsrichtung orientierte Nut-Längsseiten und in Stutzen-Längsrichtung orientierte Nut-Schmalseiten hat, und dass zwischen dieser Halteprofilierung und dem Kupplungsende wenigstens eine in Stutzen-Umfangsrichtung orientierte Halterippe vorgesehen ist.

Auch die gemäß diesem Erfindungsvorschlag ausgestaltete Schlauchkupplung ist hülsenförmig ausgestaltet und weist an wenigstens einem Kupplungsende einen Anschlussstutzen mit einer Halteprofilierung auf, die zumindest in einem Stutzen-Teilbereich außenumfangsseitig vorgesehen ist. Am Anschlussstutzen der Schlauchkupplung gemäß diesem Erfindungsvorschlag ist an dem dem Kupplungsende abgewandten Stutzen-Teilbereich eine Halteprofilierung vorgesehen, die ebenfalls durch wenigstens eine am Außenumfang des Anschlussstutzens vorgesehene Haltenut gebildet ist, welche in Stutzen-Umfangsrichtung orientierte Nut-Längsseiten und in Stutzen-Längsrichtung orientierte Nut-Schmalseiten hat. Dabei ist zwischen dieser Halteprofilierung und dem Kupplungsende wenigstens eine in Stutzen-Umfangsrichtung orientierte Halterippe vorgesehen. Bei dieser erfindungsgemäßen Schlauchkupplung kann der Anschlussstutzen nun deutlich kürzer ausgebildet werden, was eine enorme Materialersparnis bringt. Dabei vermag die gemäß diesem Erfindungsvorschlag ausgestaltete Schlauchkupplung hohe axiale Haltekräfte auf das auf den Anschlussstutzen aufgeschobene Schlauchende einer flexiblen Schlauchleitung auszuüben und kann gleichzeitig noch die torsionalen Haltekräfte aufnehmen, die zwischen der Schlauchleitung einerseits und der Schlauchkupplung andererseits eventuell zu übertragen sind.

Die an der erfindungsgemäßen Schlauchkupplung vorgesehene, wenigstens eine Halterippe kann in vorzugsweise gleichmäßigen Abständen unterbrochen ausgebildet sein. Um die Herstellung der erfindungsgemäßen Schlauchkupplung zu vereinfachen, ist es jedoch vorteilhaft, wenn die wenigstens eine Halterippe umlaufend ausgebildet ist.

Um in Schlauch-Längsrichtung möglichst hohe axiale Haltekräfte zwischen der erfindungsgemäßen Schlauchkupplung und dem Schlauch übertragen zu können, ist es vorteilhaft, wenn zwischen der Halteprofilierung und dem Kupplungsende wenigstens zwei voneinander beabstandete Halterippen vorgesehen sind.

Damit die Haltenuten nicht ineinander übergehen, ist es vorteilhaft, wenn die Halteprofilierung zumindest zwei Haltenuten hat, deren benachbarte Nut-Schmalseiten voneinander beanstandet sind. Sind die Nut-Schmalseiten der einander benachbarten Haltenuten voneinander beanstandet, wird einer Drehbewegung zwischen dem Anschlussstutzen einerseits und dem darauf aufgeschobenen Schlauchende andererseits mit Sicherheit vermieden.

Dabei sieht eine besonders einfache und mit vergleichsweise geringem Aufwand herstellbare Ausführungsform gemäß der Erfindung vor, dass die auf einer gemeinsamen Umfangslinie angeordneten Haltenuten in gleichmäßigen Abständen über den Stutzen-Umfang verteilt angeordnet sind.

Die einfache Herstellbarkeit und die hohe Belastbarkeit der mit der erfindungsgemäßen Schlauchkupplung zwischen Anschlussstutzen und Schlauchende vorgesehenen Verbindung ist insbesondere dann besonders fest und belastbar, wenn die auf einer gemeinsamen Umfangslinie angeordneten Haltenuten einen im Wesentlichen dreieckigen, viereckigen, sechseckigen oder mehreckigen Stutzenquerschnitt definieren.

Um das freie Schlauchende auf den erfindungsgemäß ausgebildeten Anschlussstutzen der Schlauchkupplung leicht aufschieben zu können, ist es zweckmäßig, wenn der Anschlussstutzen einen außenumfangsseitig nutfreien Stirnendbereich hat.

Ein leichtes Aufschieben des freien Schlauchendes auf den Anschlussstutzen der erfindungsgemäßen Schlauchkupplung wird begünstigt, wenn der nutfreie Stirnendbereich des Anschlussstutzens als Aufschiebekonus ausgebildet ist und sich dazu zum Stirnende des Anschlussstutzens hin vorzugsweise konisch verjüngt.

Damit der Schlauchinnenumfang besonders gut in die am Anschlussstutzen vorgesehenen und als Halteprofilierung dienenden Haltenuten eingedrückt wird, ist es vorteilhaft, wenn das auf das profilierte Kupplungsende aufgeschobene Schlauchende dort mittels einer das Schlauchende umspannenden Quetschhülse gehalten ist.

Eine vorteilhafte Weiterbildung der Erfindung sieht vor, dass die an die Nut-Längsseiten angrenzenden und/oder die die Nut-Längsseiten der auf benachbarten Umfangslinien angeordneten Haltenuten voneinander trennenden Stutzenabschnitte des Anschlussstutzens rippenartig vorstehen. Eine solche Ausführungsform gemäß der Erfindung bietet den Vorteil, dass eine solche Schlauchkupplung trotz eines vergleichsweise kurzen Anschlussstutzens dennoch die gleichen axialen Haltekräfte für den Schlauch bietet und die gleichzeitig auch die torsionalen Haltekräfte aufzunehmen vermag. Bei dieser Ausführungsform sind die in Stutzen-Längsrichtung in etwa einer Linie angeordneten und praktisch eine 4-Kant-Fläche bildenden Haltenuten durch eine umlaufende oder eine umlaufend unterbrochene Rippe voneinander beabstandet, die mit dazu beiträgt, die axiale Fixierung zwischen dem Schlauch und dem Anschlussstutzen trotz der kürzeren Baulänge und dem damit geringeren Platz für weitere umlaufende Halterippen sicherzustellen.

Weiterbildungen gemäß der Erfindung ergeben sich aus den Ansprüchen in Verbindung mit den Figuren sowie der Beschreibung. Nachstehend wird die Erfindung anhand bevorzugter Ausführungsbeispiele noch näher beschrieben.

Es zeigt:
- Fig. 1: eine perspektivisch dargestellte Schlauchkupplung, die einen Anschlussstutzen hat, der zumindest in einem Stutzen-Teilbereich außenumfangsseitig eine Halteprofilierung aufweist, welche Halteprofilierung durch eine Vielzahl von Haltenuten gebildet ist,
- Fig. 2: eine gemäß Figur 1 ausgebildete Schlauchkupplung in einem Längsschnitt, auf deren Anschlussstutzen ein Schlauchende einer flexiblen Schlauchleitung aufgeschoben ist, wobei das Schlauchende auf dem Anschlussstutzen mittels einer Quetschhülse gehalten ist, die das Schlauchende im Bereich des profilierten Kupplungsendes umspannt,
- Fig. 3: die Schlauchkupplung aus Figur 2 in einem in Umfangsrichtung geringfügig gedrehten Längsschnitt,
- Fig. 4: die bereits in Figur 2 und 3 gezeigte Schlauchkupplung mit dem von der Quetschhülse umspannten Schlauchende in einem Längsschnitt,
- Fig. 5: die Schlauchkupplung aus den Figuren 2 bis 4 in einem Querschnitt durch Schnittebene V-V,
- Fig. 6: einen Anschlussstutzen mit einer, aus einer Vielzahl von Haltenuten angeordneten Halteprofilierung, wobei diese auf benachbarten Umfangslinien angeordneten Haltenuten versetzt zueinander angeordnet sind,
- Fig. 7: den Anschlussstutzen aus Figur 6 in einer perspektivischen Unteransicht auf das freie Stutzenende,
- Fig. 8: einen mit Figur 6 vergleichbar ausgestalteten Anschlussstutzen in einer Seitenansicht, und
- Fig. 9: den Anschlussstutzen aus Figur 8 in einer perspektivischen Unteransicht auf das freie Stutzenende.

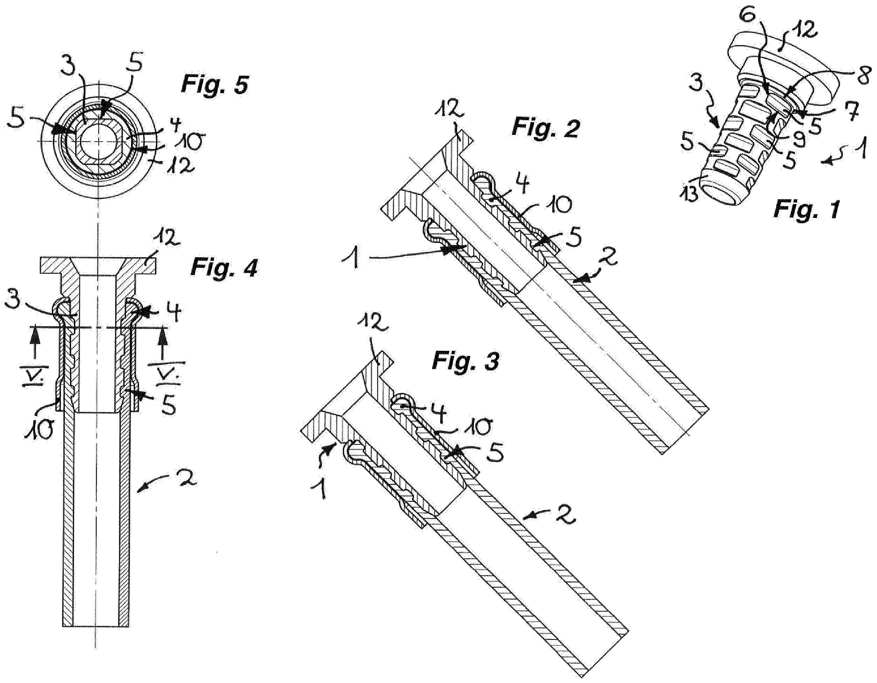

In den Figuren 1 bis 9 sind verschiedene Ausführungen einer Schlauchkupplung 1 dargestellt, die zum Anschluss eines flexiblen Schlauches 2 beispielsweise an einem Eckventil oder an einer sanitären Auslaufarmatur oder dergleichen Wasserverbrauchsstelle dient. Die Schlauchkupplung 1, 20 die hülsenförmig ausgestaltet ist, weist an wenigstens einem Kupplungsende einen Anschlussstutzen 3 auf, der zumindest in einem Stutzen-Teilbereich außenumfangsseitig eine Halteprofilierung trägt.

Wie in den Figuren 2 bis 5 erkennbar ist, ist auf das zumindest eine profilierte Kupplungsende ein Schlauchende 4 des flexiblen Schlauches 2 aufschiebbar. Die am Anschlussstutzen 3 der Schlauchkupplung 1 vorgesehene Halteprofilierung wird durch wenigstens eine und vorzugsweise - wie hier - durch eine Mehrzahl von Haltenuten 5 gebildet, die am Außenumfang des Anschlussstutzens 3 vorgesehen sind. Jede dieser, als Einsenkung in den Stutzen-Außenumfang ausgebildeten Haltenuten 5 weist in Stutzen-Längsrichtung orientierte Nut-Schmalseiten 6, 7 und in Stutzen-Umfangsrichtung orientierte Nut-Längsseiten 8, 9 auf.

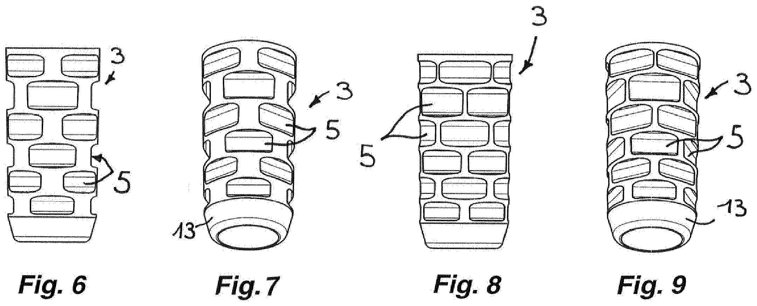

Jeweils eine Teilmenge der Haltenuten 5 ist auf einer gemeinsamen Stutzen-Umfangslinie angeordnet. Dabei sind die benachbarten Nut-Schmalseiten 6, 7 einander angrenzender Haltenuten 5 voneinander beabstandet. Dabei bilden die auf einer der Umfangslinien angeordneten Haltenuten 5 der in den Figuren 8 und 9 gezeigten Ausführungen einen sechseckigen Stutzenquerschnitt. In den Figuren 1, 6 bis 7 und 8 bis 9 ist erkennbar, dass die auf benachbarten Umfangslinien angeordneten Haltenuten 5 derart versetzt zueinander angeordnet sein können, dass benachbarte Nut-Schmalseiten 6, 7 von auf einer gemeinsamen Umfangslinie angeordneten Haltenuten 5 etwa mittig zu einer auf einer benachbarten Umfangslinie vorgesehenen Haltenut 5 angeordnet sind.

In den Figuren 1, 6 bis 7 und 8 bis 9 ist erkennbar, dass der Anschlussstutzen 3 einen außenumfangsseitig nutfreien Stirnendbereich 13 aufweisen kann. Um das Schlauchende 4 des flexiblen Schlauches 2 leicht und mit geringem Aufwand auf den Anschlussstutzen 3 aufschieben zu können, ist es vorteilhaft, wenn der nutfreie Stirnendbereich 13 als Aufschiebekonus ausgebildet ist und dazu sich zum Stirnende hin vorzugsweise konisch verjüngt. Damit das elastische Material des flexiblen Schlauches 2 sich gut in die als Halteprofilierung dienenden Haltenuten 5 eingraben kann, ist eine Quetschhülse 10 vorgesehen, die das auf das profilierte Kupplungsende aufgeschobene Schlauchende 4 des Schlauches 2 umspannt. Diese Quetschhülse 10 ist von einer hier nicht weiter gezeigten erweiterten Ausgangsstellung in die in den Figuren 2 bis 4 gezeigte Halteposition verringerten Querschnitts verformbar oder umformbar. Die Schlauchkupplung 1 kann an ihrem den Anschlussstutzen 3 abgewandten Kupplungsende ein Anschlussgewinde tragen. Die hier dargestellten Schlauchkupplungen 1 weisen demgegenüber an ihrem den Anschlussstutzen 3 abgewandten Kupplungsende einen Ringflansch 12 auf, der von einer hier nicht weiter gezeigten Überwurfmutter hintergriffen wird und deren Durchstecköffnung der Anschlussstutzen 3 durchsetzt. Um die freien Schlauchenden zweier benachbarter flexibler Schlauchleitungen miteinander verbinden zu können, kann die Schlauchkupplung auch an ihren beiden Kupplungsenden jeweils einen Anschlussstutzen aufweisen.

In den Figuren ist erkennbar, dass die Haltenuten 5 an dem Anschlussstutzen 3 der Schlauchkupplung einen Nutgrund haben, der hier plan ausgestaltet ist. Die in dem Stutzen-Teilbereich der Schlauchkupplung vorgesehene Halteprofilierung weist hier zumindest zwei und insbesondere vier Haltenuten 5 auf, die jeweils auf einer gemeinsamen Umfangslinie angeordnet sind. Dabei sind die auf einer gemeinsamen Umfangslinie angeordneten Haltenuten 5 in gleichmäßigen Abständen über den Stutzen-Umfang des Anschlussstutzens 3 verteilt angeordnet. Der Stutzen-Teilbereich weist hier eine Mehrzahl von, auf wenigstens zwei Umfangslinien angeordnete Haltenuten 5 auf, wobei die einander zugewandten Nut-Längsseiten der auf den benachbarten Umfangslinien angeordneten Haltenuten voneinander beabstandet sind.

### Bezugszeichenliste

- 1: Schlauchkupplung
- 2: Schlauch
- 3: Anschlussstutzen
- 4: Schlauchende
- 5: Haltenut
- 6: Nut-Schmalseite
- 7: Nut-Schmalseite
- 8: Nut-Längsseite
- 9: Nut-Längsseite
- 10: Quetschhülse
- 11: Nutgrund
- 12: Ringflansch
- 13: nutfreier Stirnendbereich

## Patentansprüche

1. Schlauchkupplung (1), die hülsenförmig ausgestaltet ist, und die an wenigstens einem Kupplungsende einen Anschlussstutzen (3) mit einer, zumindest in einem Stutzen-Teilbereich außenumfangsseitig vorgesehenen Halteprofilierung aufweist, auf welches Kupplungsende ein Schlauchende (4) eines flexiblen Schlauches (2) aufschiebbar ist, wobei die Halteprofilierung durch, am Außenumfang des Anschlussstutzens (3) vorgesehene Haltenuten (5) gebildet ist, die in Stutzen-Umfangsrichtung orientierte Nut-Längsseiten (8, 9) und in Stutzen-Längsrichtung orientierte Nut-Schmalseiten (6, 7) haben, wobei die Haltenuten (5) lediglich als Einsenkungen in dem Stutzen-Außenumfang ausgebildet sind, wobei die Haltenuten (5) einen Nutgrund (11) aufweisen, der plan ausgestaltet ist, und wobei die Halteprofilierung zumindest zwei, etwa auf einer gemeinsamen Umfangslinie angeordnete Haltenuten (5) aufweist, **dadurch gekennzeichnet, dass** zumindest in einem Teilbereich des Anschlussstutzens (3) auf wenigstens zwei Umfangslinien angeordnete Haltenuten (5) vorgesehen sind, dass die einander zugewandten Nut-Längsseiten (8, 9) der auf benachbarten Umfangslinien angeordneten Haltenuten (5) voneinander beabstandet sind, und dass die auf benachbarten Umfangslinien angeordneten Haltenuten (5) versetzt zueinander angeordnet sind.

2. Schlauchkupplung nach Anspruch 1, **dadurch gekennzeichnet, dass** die Halteprofilierung in einem dem Kupplungsende abgewandten Stutzen-Teilbereich des Anschlussstutzens vorgesehen ist, dass die Halteprofilierung durch wenigstens eine, am Außenumfang des Anschlussstutzens vorgesehene Haltenut (5) gebildet ist, die in Stutzen-Umfangsrichtung orientierte Nut-Längsseiten (8, 9) und in Stutzen-Längsrichtung orientierte Nut-Schmalseiten (6, 7) hat, und dass zwischen dieser Halteprofilierung und dem Kupplungsende wenigstens eine in Stutzen-Umfangsrichtung orientierte Halterippe (23) vorgesehen ist.

3. Schlauchkupplung nach Anspruch 2, **dadurch gekennzeichnet, dass** die wenigstens eine Halterippe (23) umlaufend oder in vorzugsweise gleichmäßigen Abständen unterbrochen ausgebildet ist.

4. Schlauchkupplung nach Anspruch 2 oder 3, **dadurch gekennzeichnet, dass** zwischen der Halteprofilierung und dem Kupplungsende wenigstens zwei voneinander beabstandete Halterippen (23) vorgesehen sind.

5. Schlauchkupplung nach einem der Ansprüche 1 bis 4, **dadurch gekennzeichnet, dass** die Halteprofilierung zumindest zwei Haltenuten (5) hat, deren benachbarte Nut-Schmalseiten (6, 7) voneinander beabstandet sind.

6. Schlauchkupplung nach einem der Ansprüche 1 bis 5, **dadurch gekennzeichnet, dass** die auf einer gemeinsamen Umfangslinie angeordneten Haltenuten (5) in gleichmäßigen Abständen über den Stutzen-Umfang verteilt angeordnet sind.

7. Schlauchkupplung nach einem der Ansprüche 1 bis 6, **dadurch gekennzeichnet, dass** die auf einer gemeinsamen Umfangslinie angeordneten Haltenuten (5) einen im Wesentlichen dreieckigen, viereckigen, sechseckigen oder polygonen Stutzenquerschnitt definieren.

8. Schlauchkupplung nach einem der Ansprüche 1 bis 7, **dadurch gekennzeichnet, dass** die auf benachbarten Umfangslinien angeordneten Haltenuten (5) derart versetzt zueinander angeordnet sind, dass benachbarte Nut-Schmalseiten (6, 7) von auf einer gemeinsamen Umfangslinie angeordneten Haltenuten (5) etwa mittig zu einer auf einer benachbarten Umfangslinie vorgesehenen Haltenut (5) angeordnet sind.

9. Schlauchkupplung nach einem der Ansprüche 1 bis 8, **dadurch gekennzeichnet, dass** der Anschlussstutzen einen außenumfangsseitig nutfreien Stirnendbereich (13) hat.

10. Schlauchkupplung nach Anspruch 9, **dadurch gekennzeichnet, dass** der nutfreie Stirnendbereich (13) des Anschlussstutzens (3) als Aufschiebekonus ausgebildet ist und sich dazu zum Stirnende hin vorzugsweise konisch verjüngt.

11. Schlauchkupplung nach einem der Ansprüche 1 bis 10, **dadurch gekennzeichnet, dass** das auf das profilierte Kupplungsende aufgeschobene Schlauchende (4) dort mittels einer das Schlauchende (4) umspannenden Quetschhülse (10) gehalten ist.

12. Schlauchkupplung nach einem der Ansprüche 1 bis 11, **dadurch gekennzeichnet, dass** die an die Nut-Längsseiten (8, 9) angrenzenden und/oder die die Nut-Längsseiten (8, 9) der auf benachbarten Umfangslinien angeordneten Haltenuten (5) voneinander trennende Stutzenabschnitte (24) des Anschlussstutzens (3) rippenartig nach außen vorstehen und sich radial nach außen vorzugsweise verjüngen.

## Claims

1. Hose coupling (1) which is of sleeve-shaped form and which, at at least one coupling end, has a connector (3) with a retention profiling provided on the outer circumference at least in one connector subregion, onto which coupling end a hose end (4) of a flexible hose (2) can be pushed, wherein the retention profiling is formed by retention grooves (5) which are provided on the outer circumference of the connector (3) and which have groove long sides (8, 9) oriented in the connector circumferential direction and groove narrow sides (6, 7) oriented in the connector longitudinal direction, wherein the retention grooves (5) are formed merely as recesses in the connector outer circumference, wherein the retention grooves (5) have a groove base (11) which is flat form, and **characterized in that** the retention profiling has at least two retention grooves (5) arranged approximately on a common circumferential line, **characterized in that**, in at least one subregion of the connector (3), retention grooves (5) are provided so as to be arranged on at least two circumferential lines, **in that** the groove long sides (8, 9), which face toward one another, of the retention grooves (5) arranged on adjacent circumferential lines are spaced apart from one another, and **in that** the retention grooves (5) arranged on adjacent circumferential lines are arranged offset with respect to one another.

2. Hose coupling according to Claim 1, **characterized in that** the retention profiling is provided in a connector subregion of the connector, which connector subregion faces away from the coupling end, **in that** the retention profiling is formed by at least one retention groove (5) provided on the outer circumference of the connector, which retention groove has groove long sides (8, 9) oriented in the connector circumferential direction and groove narrow sides (6, 7) oriented in the connector longitudinal direction, and **in that** at least one retention rib (23) oriented in the connector circumferential direction is provided between said retention profiling and the coupling end.

3. Hose coupling according to Claim 2, **characterized in that** the at least one retention rib (23) is of encircling form, or has interruptions at preferably uniform intervals.

4. Hose coupling according to Claim 2 or 3, **characterized in that** at least two retention ribs (23) which are spaced apart from one another are provided between the retention profiling and the coupling end.

5. Hose coupling according to one of Claims 1 to 4, **characterized in that** the retention profiling has at least two retention grooves (5), the adjacent groove narrow sides (6, 7) of which are spaced apart from one another.

6. Hose coupling according to one of Claims 1 to 5, **characterized in that** the retention grooves (5) arranged on a common circumferential line are arranged so as to be distributed over the connector circumference at uniform intervals.

7. Hose coupling according to one of Claims 1 to 6, **characterized in that** the retention grooves (5) arranged on a common circumferential line define a substantially triangular, square, hexagonal or polygonal connector cross section.

8. Hose coupling according to one of Claims 1 to 7, **characterized in that** the retention grooves (5) arranged on adjacent circumferential lines are arranged offset with respect to one another such that adjacent groove narrow sides (6, 7) of retention grooves (5) arranged on a common circumferential line are arranged approximately centrally with respect to a retention groove (5) provided on an adjacent circumferential line.

9. Hose coupling according to one of Claims 1 to 8, **characterized in that** the connector has a groove-free face end region (13) on the outer circumference.

10. Hose coupling according to Claim 9, **characterized in that** the groove-free face end region (13) of the connector (3) is in the form of a push-on cone and, for this purpose, tapers in preferably conical fashion toward the face end.

11. Hose coupling according to one of Claims 1 to 10, **characterized in that** the hose end (4) that has been pushed onto the profiled coupling end is retained thereon by means of a crimp sleeve (10) which encompasses the hose end (4).

12. Hose coupling according to one of Claims 1 to 11, **characterized in that** the connector sections (24) of the connector (3) which adjoin the groove long sides (8, 9) and/or separate the groove long sides (8, 9) of the retention grooves (5) arranged on adjacent circumferential lines from one another project outward in the manner of ribs and preferably taper in the radially outward direction.

## Revendications

1. Raccord de flexible (1), qui est configuré en forme de douille, et qui présente à au moins une extrémité de raccord un embout de raccordement (3) avec un profilage de retenue prévu en périphérie extérieure sur au moins une zone partielle de l'embout, extrémité de raccord sur laquelle une extrémité de flexible (4) d'un tuyau flexible (2) peut être glissée, dans lequel le profilage de retenue est formé par des rainures de retenue (5) prévues à la périphérie extérieure de l'embout de raccordement (3), qui présentent des longs côtés de rainure (8, 9) orientés dans la direction périphérique de l'embout et des côtés étroits de rainure (6, 7) orientés dans la direction longitudinale de l'embout, dans lequel les rainures de retenue (5) sont formées uniquement par des enfoncements dans la périphérie extérieure de l'embout, dans lequel les rainures de retenue (5) présentent un fond de rainure (11), qui est plan et dans lequel le profilage de retenue présente au moins deux rainures de retenue (5) disposées environ sur une ligne périphérique commune, **caractérisé en ce qu'**il est prévu au moins dans une zone partielle de l'embout de raccordement (3) des rainures de retenue (5) disposées sur au moins deux lignes périphériques, **en ce que** les longs côtés de rainure (8, 9) tournés l'un vers l'autre des rainures de retenue (5) disposées sur des lignes périphériques voisines sont espacés l'un de l'autre, et **en ce que** les rainures de retenue (5) disposées sur des lignes périphériques voisines sont disposées en décalage l'une par rapport à l'autre.

2. Raccord de flexible selon la revendication 1, **caractérisé en ce que** sur le profilage de retenue est prévu dans une zone partielle de l'embout de raccordement éloignée de l'extrémité de raccord, **en ce que** le profilage de retenue est formé par au moins une rainure de retenue (5) prévue à la périphérie extérieure de l'embout de raccordement, qui présente des longs côtés de rainure (8, 9) orientés dans la direction périphérique de l'embout et des côtés étroits de rainure (6, 7) orientés dans la direction longitudinale de l'embout, et **en ce qu'**il est prévu entre ce profilage de retenue et l'extrémité de raccord au moins une nervure de retenue (23) orientée dans la direction périphérique de l'embout.

3. Raccord de flexible selon la revendication 2, **caractérisé en ce que** ladite au moins une nervure de retenue (23) est périphérique continue ou est interrompue à intervalles réguliers.

4. Raccord de flexible selon la revendication 2 ou 3, **caractérisé en ce qu'**il est prévu entre le profilage de retenue et l'extrémité de raccord au moins deux nervures de retenue (23) espacées l'une de l'autre.

5. Raccord de flexible selon l'une quelconque des revendications 1 à 4, **caractérisé en ce que** le profilage de retenue comporte au moins deux rainures de retenue (5), dont les côtés étroits de rainure voisins (6, 7) sont espacés l'un de l'autre.

6. Raccord de flexible selon l'une quelconque des revendications 1 à 5, **caractérisé en ce que** les rainures de retenue (5) disposées sur une ligne périphérique commune sont disposées de façon répartie à intervalles réguliers sur la périphérie de l'embout.

7. Raccord de flexible selon l'une quelconque des revendications 1 à 6, **caractérisé en ce que** les rainures de retenue (5) disposées sur une ligne périphérique commune définissent une section transversale d'embout essentiellement triangulaire, carrée, hexagonale ou polygonale.

8. Raccord de flexible selon l'une quelconque des revendications 1 à 7, **caractérisé en ce que** les rainures de retenue (5) disposées sur des lignes périphériques voisines sont disposées en décalage l'une par rapport à l'autre, de telle manière que des côtés étroits de rainure proches (6, 7) de rainures de retenue (5) disposées sur une ligne périphérique commune soient disposés environ au milieu d'une rainure de retenue (5) prévue sur une ligne périphérique voisine.

9. Raccord de flexible selon l'une quelconque des revendications 1 à 8, **caractérisé en ce que** l'embout de raccordement présente une zone d'extrémité frontale (13) sans rainure en périphérie extérieure.

10. Raccord de flexible selon la revendication 9, **caractérisé en ce que** la zone d'extrémité frontale sans rainure (13) de l'embout de raccordement (3) est réalisée en forme de cône de montage et se rétrécit à cet effet de préférence sous forme conique en direction de l'extrémité frontale.

11. Raccord de flexible selon l'une quelconque des revendications 1 à 10, **caractérisé en ce que** l'extrémité de flexible (4) glissée sur l'extrémité de raccord profilée y est maintenue au moyen d'une douille de pincement (10) enserrant l'extrémité de flexible (4).

12. Raccord de flexible selon l'une quelconque des revendications 1 à 11, **caractérisé en ce que** les parties d'embout (24) de l'embout de raccordement (3) adjacentes aux longs côtés de rainure (8, 9) et/ou séparant l'un de l'autre les longs côtés de rainure (8, 9) des rainures de retenue (5) disposées sur des lignes périphériques voisines sont saillantes vers l'extérieur et de préférence s'amincissent radialement vers l'extérieur.
